# EUROPÄISCHE PATENTSCHRIFT

(11) **EP 3 571 543 B1**
(45) Veröffentlichungstag und Bekanntmachung des Hinweises auf die Patenterteilung: **10.03.2021**
(21) Anmeldenummer: 18700654.9
(22) Anmeldetag: 12.01.2018
(51) Int. Cl.: G02B 27/01, G06F 3/01

(54) **UNTERHALTUNGSSYSTEM FÜR EIN KRAFTFAHRZEUG UND VERFAHREN ZUM BETREIBEN EINES UNTERHALTUNGSSYSTEMS**
ENTERTAINMENT SYSTEM FOR A MOTOR VEHICLE AND METHOD FOR OPERATING AN ENTERTAINMENT SYSTEM
SYSTÈME DE DIVERTISSEMENT POUR UN VÉHICULE AUTOMOBILE ET PROCÉDÉ D'ACTIONNEMENT D'UN SYSTÈME DE DIVERTISSEMENT

(30) Priorität: 18.01.2017 DE 102017200733
(43) Veröffentlichungstag der Anmeldung: 27.11.2019
(73) Patentinhaber: Audi AG, 85045 Ingolstadt (DE)
(72) Erfinder: KÜHNE, Marcus, 92339 Beilngries (DE); ZUCHTRIEGEL, Thomas, 81925 München (DE); PROFENDINER, Daniel, 85049 Ingolstadt (DE)
(86) Internationale Anmeldenummer: PCT/EP2018/050710
(87) Internationale Veröffentlichungsnummer: WO 2018/134123

(56) Entgegenhaltungen:
- WO-A1-2007/032278
- WO-A1-2016/184541
- DE-A1-102013 005 342
- US-A1- 2012 139 716

## Beschreibung

Die Erfindung betrifft ein Unterhaltungssystem für ein Kraftfahrzeug sowie ein Verfahren zum Betreiben eines derartigen Unterhaltungssystems.

Die Verwendung von Datenbrillen, beispielsweise von sogenannten Augmented-Reality-Brillen, in Kraftfahrzeugen ist an sich bekannt. So zeigt beispielsweise die DE 10 2013 005 342 A1 ein Verfahren, bei welchem Informationen in einer Datenbrille in Abhängigkeit von einer erfassten Fahrer-Blickrichtung während eines autonomen Fahrbetriebs angezeigt werden.

Die US 2015/097860 A1 offenbart ein Unterhaltungssystem für ein Kraftfahrzeug gemäß dem Oberbegriff von Anspruch 1.

Die US 8 108 083 B2 offenbart ein Unterhaltungssystem für ein Kraftfahrzeug, das dazu eingerichtet ist, anhand von Sensoren den Zustand des Fahrers zu bestimmen, und, wenn beim Fahrer Aufregung oder Übelkeit festgestellt wird, beruhigende Musik auszuwählen und wiederzugeben.

Die Veröffentlichung KESHAVARZ BEHRANG ET AL: "Pleasant music as a countermeasure against visually induced motion sickness", APPLIED ERGONOMICS, Bd. 45, Nr. 3, 17. August 2013, Seiten 521-527, ISSN: 0003-6870, DOI: 10.1016/ J.APERGO.2013.07.009 offenbart, dass als von Probanden angenehm empfundene Musik die visuell ausgelöste Bewegungskrankheit reduzieren kann.

Während der Fahrt mit einem Kraftfahrzeug haben Fahrzeuginsassen dadurch grundsätzlich die Möglichkeit, mittels am Kopf tragbarer visueller Ausgabegeräte, wie z.B. mittels Augmented-Reality-Brillen oder auch Virtual-Reality-Brillen, sich verschiedenste Inhalte anzeigen zu lassen, seien es Informationen und/oder Unterhaltungsinhalte.

Als virtuelle Realität wird die Darstellung und gleichzeitige Wahrnehmung der Wirklichkeit und ihrer physikalischen Eigenschaften in einer in Echtzeit computergenerierten, interaktiven virtuellen Umgebung bezeichnet. Eine Vermischung der virtuellen Realität und der reinen Realität wird gemischte Realität oder erweiterte Realität, engl. Mixed Reality, auch Augmented Reality, genannt. Unter erweiterter Realität versteht man die computergestützte Erweiterung der Realitätswahrnehmung. Diese Information kann alle menschlichen Sinnesmodalitäten ansprechen. Häufig wird jedoch unter erweiterter Realität auch nur die visuelle Darstellung von Informationen verstanden, also die Ergänzung von Bildern oder Videos mit computergenerierten Zusatzinformationen oder virtuellen Objekten mittels Einblendung/Überlagerung.

Zur Darstellung virtueller Realitäten und erweiterter Realitäten werden spezielle Ausgabegeräte verwendet, oftmals sogenannte Head-Mounted Displays.

Ein Head-Mounted Display (wörtlich "am Kopf befestigte Anzeige") ist ein auf bzw. am Kopf tragbares visuelles Ausgabegerät. Es präsentiert Bilder entweder auf einem augennahen Bildschirm oder projiziert sie direkt auf die Netzhaut. Derartige Head-Mounted Displays werden auch als mehr oder weniger brillenartige tragbare Vorrichtungen angeboten. Je nachdem, ob derartige am Kopf tragbare visuelle Ausgabegeräte dazu ausgelegt sind, eine virtuelle Realität oder erweiterte Realität anzuzeigen, werden diese auch als Virtual-Reality-Brille bzw. Augmented-Reality-Brille bezeichnet. Eine Virtual-Reality-Brille schottet den Träger der Virtual-Reality-Brille üblicherweise optisch vollkommen von seiner Umgebung ab, sodass der Träger nur die mittels der Virtual-Reality-Brille angezeigten Inhalte, aber nicht seine reale Umwelt, sehen kann. Eine Augmented-Reality-Brille ist hingegen so ausgeführt, dass der Träger seine Umwelt noch sehen kann.

Bei einem autonom fahrenden Kraftfahrzeug könnte auch z.B. der Fahrer eine Virtual-Reality-Brille aufgesetzt haben, wobei bei nicht-autonom fahrenden Fahrzeugen der Fahrer nur eine Augmented-Reality-Brille aufgesetzt haben sollte, damit er seine Umwelt noch sehen kann. Insbesondere unter Verwendung von Virtual-Reality-Brillen kann es passieren, dass Fahrzeuginsassen, die eine solche Virtual-Reality-Brille aufgesetzt haben, übel wird. Das passiert häufig dann, wenn die angezeigten virtuellen Inhalte davon abweichen, was die Sinnesorgane des Trägers der Virtual-Reality-Brille an Informationen zur räumlichen Lage und Bewegung seines Körpers liefern. Je größer diese Abweichung ist, desto wahrscheinlicher ist es üblicherweise, dass einem Träger einer solchen Virtual-Reality-Brille übel wird. Jeweilige individuelle Empfindlichkeiten spielen dabei ebenfalls eine Rolle. Gleiches kann grundsätzlich, allerdings in abgeschwächter Form, auch beim Tragen von Augmented-Reality-Brillen geschehen.

Es ist die Aufgabe der vorliegenden Erfindung eine Lösung bereitzustellen, welche es Fahrzeuginsassen ermöglicht, sich mittels eines am Kopf tragbaren visuellen Ausgabegeräts besonders realistische Inhalte anzeigen zu lassen ohne dass ihnen dabei übel wird.

Diese Aufgabe wird durch ein Unterhaltungssystem für ein Kraftfahrzeug sowie durch ein Verfahren zum Betreiben eines Unterhaltungssystems mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Das Unterhaltungssystem ist dazu in der Lage, Sensordaten von einem oder auch mehreren Sensoren zu nutzen, um einem Träger des am Kopf tragbaren visuellen Ausgabegeräts anzuzeigen, was seine Sinnesorgane ihm an Informationen zu seiner räumlichen Lage und Bewegung liefern, während der Träger des visuellen Ausgabegeräts in einem Kraftfahrzeug sitzt und sich insbesondere mit diesem fortbewegt. Dabei kann es vorgesehen sein, dass beispielsweise mittels des visuellen Ausgabegeräts eine virtuelle Umgebung angezeigt wird, wobei in diesem Fall sämtliche virtuellen Elemente der angezeigten virtuellen Umgebung entsprechend der Fortbewegung und räumlichen Lage des Kraftfahrzeugs fortlaufend angepasst werden. Bewegt sich das Kraftfahrzeug also beispielsweise besonders schnell vorwärts, so bewegt sich der Träger des visuellen Ausgabegeräts virtuell besonders schnell innerhalb einer angezeigten virtuellen Umgebung. Fährt beispielsweise das Kraftfahrzeug bergab, so bewegt sich der Träger des visuellen Ausgabegeräts innerhalb der virtuellen Umgebung ebenfalls bergab und umgekehrt. Im Wesentlichen werden sämtliche Informationen im Hinblick auf die Bewegung des Kraftfahrzeugs und auf die Lage des Kraftfahrzeugs, und somit auch sämtliche Informationen im Hinblick auf die tatsächliche Bewegung des Trägers und die Lage des Trägers des visuellen Ausgabegeräts beim Ansteuern des visuellen Ausgabegeräts berücksichtigt und entsprechend umgesetzt.

Alternativ ist es auch möglich, dass mittels des visuellen Ausgabegeräts beispielsweise in einem Teilbereich eine Art virtuelle Kinoleinwand angezeigt wird, auf welcher ein Film abgespielt wird. Um die virtuelle Kinoleinwand herum können beispielsweise weitere virtuelle Elemente angezeigt werden, welche entsprechend der Fortbewegung mit dem Kraftfahrzeug und der Lage des Kraftfahrzeugs fortlaufend angepasst werden. Das Größenverhältnis zwischen der virtuellen Kinoleinwand und den diesen umgebenden Bereich, in welchem die virtuellen Elemente entsprechend der Bewegung und Lage des Kraftfahrzeugs angepasst werden, kann dabei beispielsweise über eine Benutzerschnittstelle des Unterhaltungssystems frei konfigurierbar sein. Je nachdem, wie anfällig ein Träger des visuellen Ausgabegeräts für die sogenannte Reise- oder Bewegungskrankheit, fachsprachlich Kinetose genannte körperliche Reaktion ist, kann er das Verhältnis so wählen, dass ihm nicht schlecht wird.

Beispielsweise ist es auch möglich, dass der Träger des visuellen Ausgabegeräts im Kraftfahrzeug sitzend gerade durch eine Rechtskurve fährt, wobei die umgebende reale Landschaft relativ langweilig ist. Mittels des visuellen Ausgabegeräts kann dann beispielsweise statt einer Autobahn, welche sich entlang einer grünen leeren Wiese schlängelt, eine schöne Kurve entlang einer Küstenstraße mit einer grandiosen Aussicht und Sonnenuntergangsstimmung gezeigt werden. Dabei wird das visuelle Ausgabegerät so angesteuert, dass die virtuelle Küstenstraße derart angezeigt wird, wie das Kraftfahrzeug die reale Straße entlang der Kurve fährt. Insbesondere das Beschleunigungsempfinden, also die Querbeschleunigung des Trägers des visuellen Ausgabegeräts bei der Kurvenfahrt wird also zumindest im Wesentlichen 1:1 bei der Anzeige der virtuellen Küstenstraße umgesetzt. Das Unterhaltungssystem bietet also die Möglichkeit, augmentierte oder auch virtuelle Inhalte besonders realitätsgetreu anzuzeigen. Dabei sorgt das Unterhaltungssystem noch dafür, dass einem Träger des visuellen Ausgabegeräts nicht schlecht wird, da die angezeigten virtuellen oder augmentierten Inhalte zumindest in Teilen oder auch vollständig mit den Sinneswahrnehmungen des Trägers des visuellen Ausgabegeräts im Hinblick auf seine räumliche Lage und Bewegung übereinstimmen.

Die Steuereinrichtung ist dazu eingerichtet, einen Zustand eines Trägers des am Kopf tragbaren visuellen Ausgabegeräts charakterisierende Sensordaten auszuwerten und das visuelle Ausgabegerät in Abhängigkeit von diesen Sensordaten anzusteuern. Beispielsweise können sogenannte Bio-Sensoren fahrzeugseitig in einem Sitz, in einem Lenkrad oder dergleichen untergebracht sein, mittels welchen der Zustand des Trägers des visuellen Ausgabegeräts während der Fahrt mit dem Kraftfahrzeug fortlaufend erfasst werden kann. Beispielsweise können dadurch Rückschlüsse auf die Gemütslage oder auch das Energielevel des Trägers geschlossen werden. In Abhängigkeit von diesen Daten bzw. Informationen ist die Steuereinrichtung dazu eingerichtet, das visuelle Ausgabegerät anzusteuern. Die mittels des visuellen Ausgabegeräts angezeigten Inhalte können also an den jeweiligen Zustand des Trägers des visuellen Ausgabegeräts angepasst werden. Sollte der Träger beispielsweise besonders unfit sein, könnte es sein, dass er wesentlich anfälliger darauf reagiert, wenn größere Diskrepanzen zwischen seinen Sinneswahrnehmungen im Hinblick auf seine Lage und Bewegung und den mittels des visuellen Ausgabegeräts angezeigten Inhalten auftreten. Unter Berücksichtigung dieses Umstands kann das visuelle Ausgabegerät entsprechend angesteuert werden, sodass die angezeigten virtuellen oder augmentierten Inhalte möglichst deckungsgleich mit den Sinneseindrücken des Trägers des visuellen Ausgabegeräts im Hinblick auf seine Lage und Bewegung sind.

Eine weitere vorteilhafte Ausführungsform der Erfindung sieht vor, dass die Steuereinrichtung dazu eingerichtet ist, persönliche Vorlieben eines Trägers des am Kopf tragbaren visuellen Ausgabegeräts charakterisierende Daten auszuwerten und das visuelle Ausgabegerät in Abhängigkeit von diesen Daten anzusteuern. Beispielsweise kann das Unterhaltungssystem ein Kommunikationsmodul aufweisen, mittels welchem ein Zugriff auf eines oder mehrere Social Media Profile des Trägers besteht. Alternativ oder zusätzlich ist es beispielsweise auch möglich, dass auf verschiedene Musikdatenbanken des Trägers zugegriffen wird. So können beispielsweise persönliche Vorlieben des Trägers im Hinblick auf seinen Musikgeschmack oder auch im Hinblick auf beliebte Urlaubsziele oder dergleichen bei der Anzeige von virtuellen oder augmentierten Inhalten mittels des visuellen Ausgabegeräts berücksichtigt werden. Durch musikalische Untermalung und/oder Wahl der angezeigten Inhalte passend zu den Vorlieben des Trägers kann dieser so beeinflusst werden, dass ihm weniger oder gar nicht übel wird.

Gemäß einer weiteren vorteilhaften Ausführungsform der Erfindung ist es vorgesehen, dass das Unterhaltungssystem ausschließlich fahrzeugfremde Sensoren zum Erfassen der Bewegung des Kraftfahrzeugs und/oder zum Erfassen der räumlichen Lage des Kraftfahrzeugs und/oder zum Erfassen des Zustands eines Trägers des am Kopf tragbaren visuellen Ausgabegeräts aufweist. Dadurch kann das gesamte Unterhaltungssystem mit zugehörigen Sensoren als eine Art Nachrüstsatz ausgebildet sein. Im Wesentlichen kraftfahrzeugunabhängig kann das Unterhaltungssystem so jederzeit nachgerüstet werden, um die vorstehend bereits erwähnten Funktionalitäten und Vorteile zu erzielen. So können beispielsweise auch ältere Fahrzeugmodelle ohne Weiteres mittels des Unterhaltungssystems nachgerüstet werden.

Gemäß einer alternativen vorteilhaften Ausführungsform der Erfindung ist es vorgesehen, dass das Unterhaltungssystem ausschließlich fahrzeugseitig integrierte Sensoren zum Erfassen der Bewegung des Kraftfahrzeugs und/oder zum Erfassen der räumlichen Lage des Kraftfahrzeugs und/oder zum Erfassen des Zustands eines Trägers des am Kopf tragbaren visuellen Ausgabegeräts aufweist. Ein Teil des Unterhaltungssystems, insbesondere die besagten Sensoren, können also fest in einem Kraftfahrzeug integriert sein. Alternativ ist es auch möglich, dass die Sensoren selbst oder ein Teil der Sensoren selbst gar nicht Teil des Unterhaltungssystems sind, wobei das Unterhaltungssystem lediglich eine Schnittstelle aufweist, über welche es Zugriff auf die erforderlichen Sensordaten hat.

In diesem Zusammenhang ist es insbesondere vorteilhaft, wenn das Unterhaltungssystem eine mit einer fahrzeugseitigen Diagnosebuchse kompatible Schnittstelle zum Übertragen der Sensordaten an die Steuereinrichtung aufweist. Bei dieser Schnittstelle kann es sich beispielsweise um einen sogenannten OBD-Dongle handeln, welcher an einer OBD-Schnittstelle, welche üblicherweise in allen modernen Fahrzeugen vorhanden ist, eingesteckt werden kann, um an die Sensordaten zu gelangen. Dabei kann es auch vorgesehen sein, dass die Steuereinrichtung eine fahrzeugfremde Steuereinrichtung ist, insbesondere in das am Kopf tragbare visuelle Ausgabegerät integriert ist. Das visuelle Ausgabegerät kann beispielsweise ein Bluetooth-Modul aufweisen, mittels welchem die Sensordaten von dem OBD-Dongle empfangen werden können.

Gemäß der Erfindung ist es vorgesehen, dass die Steuereinrichtung dazu eingerichtet ist, in Abhängigkeit von der Bewegung des Kraftfahrzeugs, dem Zustand und den persönlichen Vorlieben eines Trägers des am Kopf tragbaren visuellen Ausgabegeräts Musikdateien auszuwählen und Lautsprecher zum Ausgeben der ausgewählten Musikdateien anzusteuern. Dabei wird die Musikrichtung im Hinblick der sogenannten Beats per Minute und auch im Hinblick auf weitere Parameter an die Bewegung des Kraftfahrzeugs, den Zustand und den persönlichen Geschmack des Trägers des visuellen Ausgabegeräts angepasst.

I Die mittels des visuellen Ausgabegeräts angezeigten Inhalte können dadurch besonders gut an die aktuelle Fortbewegung mit dem Kraftfahrzeug, den Zustand des Trägers und/oder den persönlichen Geschmack des Trägers musikalisch untermalt werden. Zum einen kann dies dazu beitragen, dass die Kinetose beim Träger des visuellen Ausgabegeräts reduziert wird oder gar nicht auftritt. Zum anderen kann dies auch einfach dazu beitragen, die visuelle Wahrnehmung zusätzlich noch zu verschönern und zu verstärken.

Bei dem erfindungsgemäßen Verfahren zum Betreiben eines Unterhaltungssystems werden mittels zumindest einem am Kopf tragbaren virtuellen Ausgabegerät virtuelle Elemente aus einer vorgegebenen virtuellen Beobachtungsposition angezeigt, wobei mittels einer Steuereinrichtung eine Bewegung und/oder eine räumliche Lage eines Kraftfahrzeugs charakterisierende Sensordaten ausgewertet werden und das visuelle Ausgabegerät derart angesteuert wird, dass zumindest ein Teil der mittels des virtuellen Ausgabegeräts angezeigten virtuellen Elemente sich relativ zur virtuellen Beobachtungsposition entsprechend der Bewegung des Kraftfahrzeugs bewegen und/oder zumindest ein Teil der mittels des visuellen Ausgabegeräts angezeigten virtuellen Elemente entsprechend der räumlichen Lage des Kraftfahrzeugs relativ zur virtuellen Beobachtungsposition angeordnet werden. Vorteilhafte Ausgestaltungen des erfindungsgemäßen Unterhaltungssystems sind als vorteilhafte Ausgestaltungen des erfindungsgemäßen Verfahrens und umgekehrt anzusehen. Insbesondere weist das Unterhaltungssystem Mittel zur Durchführung der Verfahrensschritte auf.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung eines Unterhaltungssystems für ein Kraftfahrzeug, welches ein am Kopf tragbares visuelles Ausgabegerät in Form einer Virtual-Reality-Brille und eine Steuereinrichtung zum Ansteuern der Virtual-Reality-Brille umfasst, welche dazu ausgelegt ist, in Abhängigkeit von verschiedensten die Bewegung und Lage des Kraftwagens charakterisierenden Sensordaten die Virtual-Reality-Brille anzusteuern;
- Fig. 2: eine schematische Seitenansicht eines Kraftfahrzeugs, wobei ein Träger der Virtual-Reality-Brille dargestellt ist; und in
- Fig. 3: eine schematische Darstellung einer mittels der Virtual-Reality-Brille angezeigten virtuellen Küstenstraße.

In den Figuren werden gleiche oder funktionsgleiche Elemente mit den gleichen Bezugszeichen versehen.

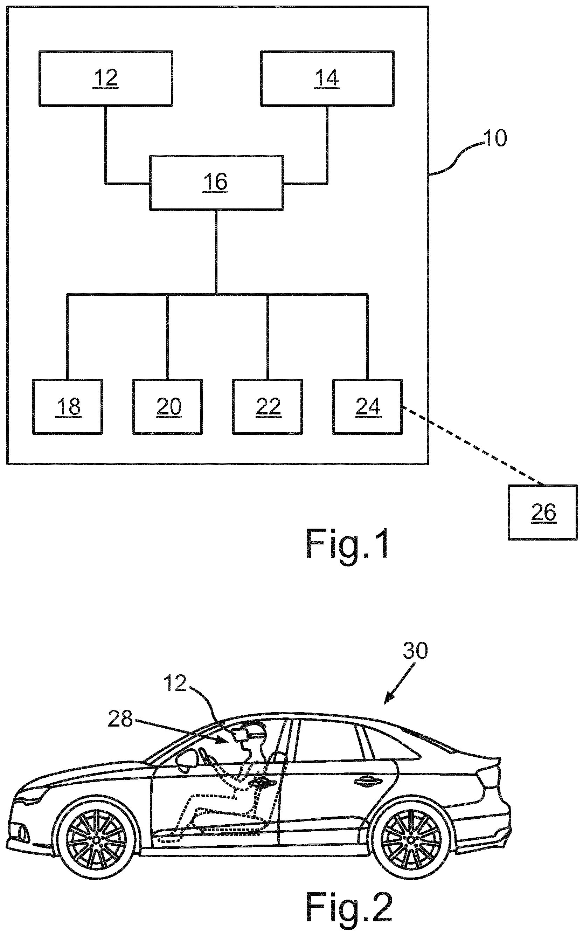

Ein Unterhaltungssystem 10 für ein nicht näher dargestelltes Kraftfahrzeug ist in einer schematischen Darstellung in Fig. 1 gezeigt. Das Unterhaltungssystem 10 umfasst ein visuelles Ausgabegerät in Form einer Virtual-Reality-Brille 12, einen Lautsprecher 14 und eine Steuereinrichtung 16, welche dazu eingerichtet ist, sowohl die Virtual-Reality-Brille 12 als auch den Lautsprecher 14 anzusteuern. Des Weiteren weist das Unterhaltungssystem 10 einen Sensor 18 auf, welcher dazu eingerichtet ist, eine Bewegung des hier nicht dargestellten Kraftfahrzeugs zu erfassen, insbesondere translatorische Bewegungen und auch Drehbewegungen bzw. Rotationsbewegungen um die Fahrzeuglängsachse, -querachse und -hochachse.

Des Weiteren weist das Unterhaltungssystem 10 einen Sensor 20 auf, mittels welchem die Lage des besagten Kraftfahrzeugs bestimmt werden kann, also beispielsweise ob das Kraftfahrzeug gerade bergauf fährt oder bergab fährt. Ferner weist das Unterhaltungssystem 10 einen Sensor 22 auf, mittels welchem unterschiedlichste Informationen und Daten im Hinblick auf den Zustand des Trägers der Virtual-Reality Brille 12 gesammelt werden können. Schließlich weist das Unterhaltungssystem 10 noch ein Kommunikationsmodul 24 auf, welches eine Datenverbindung mit einem oder mehreren Servern 26 aufbauen kann, auf welchem Informationen zu verschiedensten Vorlieben des Trägers der Virtual-Reality-Brille 12 abgespeichert sind.

Im vorliegend in Fig. 1 gezeigten Ausführungsbeispiel des Unterhaltungssystems 10 ist dieses als eine Art Nachrüstsatz ausgebildet, welches problemlos im Wesentlichen in beliebigen Kraftfahrzeugen integriert werden kann. Alternativ ist es aber auch möglich, dass das Unterhaltungssystem 10 beispielsweise lediglich nur die Virtual-Reality-Brille 12 und die Steuereinrichtung 16 aufweist, wobei sämtliche anderen Elemente 14, 18, 20, 22, 24 nicht Teil des Unterhaltungssystems 10 selbst sein müssen. Beispielsweise ist es möglich, dass der Lautsprecher 14 oder auch weitere hier nicht dargestellte Lautsprecher, sowie die Sensoren 18, 20, 22 und das Kommunikationsmodul 24 fest installierter Bestandteil eines Kraftfahrzeugs sind.

In Fig. 2 ist ein Träger 28 der Virtual-Reality-Brille 12 dargestellt, welcher in einem Kraftfahrzeug 30 sitzt. Bei dem Träger 28 kann es sich beispielsweise um den Fahrer des Kraftfahrzeugs 30 aber auch um einen Beifahrer handeln.

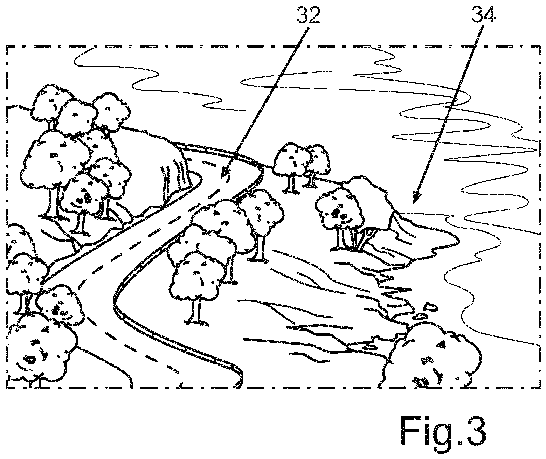

In Fig. 3 ist eine virtuelle Küstenstraße 32 dargestellt, welche entlang einer virtuellen Küste 34 verläuft. Diese entlang der virtuellen Küste 34 verlaufende virtuelle Küstenstraße 32 wird mittels der Virtual-Reality-Brille 12 angezeigt. Eine besondere Herausforderung beim Anzeigen derartiger virtueller Inhalte besteht darin, dass zum einen die angezeigte virtuelle Umgebung besonders realistisch erscheint und zum anderen gleichzeitig dem Träger 28 nicht schlecht wird. Letzteres kann insbesondere dadurch vermieden werden, dass die Sinneseindrücke des Trägers 28 im Hinblick auf seine Bewegung und seine Lage sich nicht oder nur wenig von den visuellen Sinneseindrücken im Hinblick auf die angezeigte virtuelle Umgebung, vorliegend also die virtuelle Küstenstraße 32, unterscheiden.

Die Steuereinrichtung 16 ist dazu eingerichtet, eine Bewegung und jeweilige räumliche Lage des Kraftfahrzeugs 30 charakterisierende Sensordaten von den Sensoren 18, 20 auszuwerten und die Virtual-Reality-Brille 12 derart anzusteuern, dass eine angezeigte virtuelle Fahrt entlang der virtuellen Küstenstraße 32 entsprechend der realen Fortbewegung mit dem Kraftfahrzeug 30 angezeigt wird. Der Träger 28 sieht durch die Virtual-Reality-Brille 12 die Küstenstraße 32 aus einer vorgegebenen virtuellen Beobachtungsposition so, als ob er aus einem hier nicht näher dargestellten virtuellen Kraftfahrzeug auf die Küstenstraße 32 blicken würde, während er sich virtuell entlang dieser fortbewegt. Die Küste 34 und weitere hier nicht näher bezeichnete Elemente der virtuellen Szenerie werden dabei mittels der Virtual-Reality-Brille 12 derart angezeigt, dass die gesamte virtuelle Szenerie derart an dem Träger 28 vorbeizuziehen scheint, wie er sich mit dem realen Kraftfahrzeug 30 tatsächlich fortbewegt.

Fährt der Träger 28 mit dem Kraftfahrzeug 30 also beispielsweise eine abschüssige kurvenreiche Straße entlang, so fährt er entlang der virtuellen Küstenstraße 32 ebenfalls bergab und durch eine Vielzahl von Kurven. Die Lage- und Bewegungsinformationen, die die Sinne des Trägers 28 während der realen Fahrt mit dem Kraftfahrzeug 30 liefern, entsprechend dadurch zumindest im Wesentlichen den visuellen Sinneseindrücken, die der Träger 28 aufgrund der Anzeige der virtuellen Küstenstraße 32 mittels der Virtual-Reality-Brille 12 erfährt.

Darüber hinaus ist die Steuereinrichtung 16 dazu eingerichtet, einen Zustand des Trägers 28 charakterisierende Sensordaten, welche mittels des Sensors 22 bereitgestellt werden, auszuwerten und die Virtual-Reality-Brille 12 in Abhängigkeit von diesen Sensordaten anzusteuern. Neben dem einen erwähnten Sensor 22 können auch eine Vielzahl von Sensoren 22 beispielsweise an der Virtual-Reality-Brille 12 selbst oder auch im Kraftfahrzeug 30 angeordnet sein. So können verschiedenste Informationen beispielsweise im Hinblick auf die Gemütslage und/oder das Energielevel des Trägers 28 gewonnen und bei der Ansteuerung der Virtual-Reality-Brille 12 berücksichtigt werden. Sollte der Träger 28 beispielsweise relativ müde sein, so kann ihm eine besonders abwechslungsreiche virtuelle Umgebung rund um die Küstenstraße 32 angezeigt werden. Im Wesentlichen können auf unterschiedlichste Zustände des Trägers 28 abgestimmte Inhalte mittels der Virtual-Reality-Brille 12 angezeigt werden.

Ferner ist es erfindungsgemäß auch vorgesehen, dass die Steuereinrichtung 16 persönliche Vorlieben des Trägers 28 berücksichtigt und die Virtual-Reality-Brille 12 entsprechend ansteuert. Dafür werden vom Kommunikationsmodul 14 vom Server 26 empfangene Daten ausgewertet. Der Server 26 kann beispielsweise Teil einer Social-Media-Plattform oder auch einer Musik-Plattform oder dergleichen sein. Unterschiedliche Vorlieben des Trägers 28, zum Beispiel im Hinblick auf seine liebsten Urlaubsziele, seinen Musikgeschmack und dergleichen können berücksichtigt werden. So kann zum einen die Virtual-Reality-Brille 12 so angesteuert werden, dass visuell derartige Inhalte angezeigt werden, die der Träger 28 besonders interessant oder schön findet. Darüber hinaus kann die Steuereinrichtung 16 den Lautsprecher 14 so ansteuern, dass besondere Lieblingsmusikstücke des Trägers 28 zur Untermalung der virtuellen Szenerie, also beispielsweise der angezeigten virtuellen Küstenstraße 32, abgespielt werden.

Mittels des Unterhaltungssystems 10 ist es also zum einen möglich, besonders realistisch anmutende und auf den Geschmack des Trägers 28 angepasste virtuelle Inhalte während der Fahrt mit einem Kraftfahrzeug 30 anzuzeigen. Zum anderen ist es durch Berücksichtigung der besagten Sensordaten der Sensoren 18, 20, 22 möglich, das Auftreten von Übelkeit beim Träger 28 der Virtual-Reality-Brille 12 zu vermeiden oder zumindest zu verringern.

## Patentansprüche

1. Unterhaltungssystem (10) für ein Kraftfahrzeug (30), umfassend
- zumindest ein am Kopf tragbares visuelles Ausgabegerät (12), welches dazu eingerichtet ist, virtuelle Elemente (32, 34) aus einer vorgegebenen virtuellen Beobachtungsposition anzuzeigen;
- eine Steuereinrichtung (16), welche dazu eingerichtet ist, eine Bewegung und/oder räumliche Lage des Kraftfahrzeugs (30) charakterisierende Sensordaten auszuwerten und das visuelle Ausgabegerät (12) derart anzusteuern, dass zumindest ein Teil der mittels des visuellen Ausgabegeräts (12) angezeigten virtuellen Elemente (32, 34) sich relativ zur virtuellen Beobachtungsposition entsprechend der Bewegung des Kraftfahrzeugs (30) bewegen und/oder zumindest ein Teil der mittels des visuellen Ausgabegeräts (12) angezeigten virtuellen Elemente (32, 34) entsprechend der räumlichen Lage des Kraftfahrzeugs (30) relativ zur virtuellen Beobachtungsposition angeordnet werden;
- wobei die Steuereinrichtung (16) dazu eingerichtet ist, einen Zustand eines Trägers (28) des am Kopf tragbaren visuellen Ausgabegeräts (12) charakterisierende Sensordaten auszuwerten und das visuelle Ausgabegerät (12) in Abhängigkeit von diesen Sensordaten anzusteuern;
wobei ein Kommunikationsmodul (24) des Unterhaltungssystems (10) dazu ausgelegt ist, Daten von einem Server (26) zu empfangen, welche die persönlichen Vorlieben des Trägers (28) charakterisieren;
**dadurch gekennzeichnet, dass**
- die Steuereinrichtung (16) dazu eingerichtet ist, in Abhängigkeit von der Bewegung des Kraftfahrzeugs (30), dem Zustand und den persönlichen Vorlieben eines Trägers (28) des am Kopf tragbaren visuellen Ausgabegeräts (12) Musikdateien auszuwählen und einen Lautsprecher (14) zum Ausgeben der ausgewählten Musikdateien anzusteuern;
- wobei die Steuereinrichtung (16) dazu eingerichtet ist, bei der Auswahl der Musikdateien eine Musikrichtung im Hinblick auf die Beats per Minute an die Bewegung des Kraftfahrzeugs (30), den Zustand und die persönlichen Vorlieben des Trägers (28) anzupassen.

2. Unterhaltungssystem (10) nach Anspruch 1,
**dadurch gekennzeichnet, dass**
die Steuereinrichtung (16) dazu eingerichtet ist, persönliche Vorlieben eines Trägers (28) des am Kopf tragbaren visuellen Ausgabegeräts (12) charakterisierende Daten auszuwerten und das visuelle Ausgabegerät (12) in Abhängigkeit von diesen Daten anzusteuern.

3. Unterhaltungssystem (10) nach einem der vorhergehenden Ansprüche, **dadurch gekennzeichnet, dass**
das Unterhaltungssystem (10) ausschließlich fahrzeugfremde Sensoren (18, 20, 22) zum Erfassen der Bewegung des Kraftfahrzeugs (30) und/oder zum Erfassen der räumlichen Lage des Kraftfahrzeugs (30) und/oder zum Erfassen des Zustands eines Trägers (28) des am Kopf tragbaren visuellen Ausgabegeräts (12) aufweist.

4. Unterhaltungssystem (10) nach einem der Ansprüche 1 bis 2,
**dadurch gekennzeichnet, dass**
das Unterhaltungssystem (10) ausschließlich fahrzeugseitig integrierte Sensoren (18, 20, 22) zum Erfassen der Bewegung des Kraftfahrzeugs (30) und/oder zum Erfassen der räumlichen Lage des Kraftfahrzeugs (30) und/oder zum Erfassen des Zustands eines Trägers (28) des am Kopf tragbaren visuellen Ausgabegeräts (12) aufweist.

5. Unterhaltungssystem (10) nach Anspruch 4,
**dadurch gekennzeichnet, dass**
die Steuereinrichtung (16) eine fahrzeugfremde Steuereinrichtung ist, insbesondere in das am Kopf tragbare visuelle Ausgabegerät (12) integriert ist, und das Unterhaltungssystem (10) eine mit einer fahrzeugseitigen Diagnosebuchse kompatible Schnittstelle zum Übertragen der Sensordaten an die Steuereinrichtung (16) aufweist.

6. Unterhaltungssystem (10) nach einem der vorhergehenden Ansprüche, **dadurch gekennzeichnet, dass**
das am Kopf tragbare visuelle Ausgabegerät (12) eine Virtual-Reality-Brille oder eine Augmented-Reality-Brille ist.

7. Verfahren zum Betreiben eines Unterhaltungssystems (10), bei welchem mittels zumindest einem am Kopf tragbaren visuellen Ausgabegerät (12) virtuelle Elemente (32, 34) aus einer vorgegebenen virtuellen Beobachtungsposition angezeigt werden, wobei mittels einer Steuereinrichtung (16) eine Bewegung und/oder eine räumliche Lage eines Kraftfahrzeugs (30) charakterisierende Sensordaten ausgewertet werden und das visuelle Ausgabegerät (12) derart angesteuert wird, dass zumindest ein Teil der mittels des visuellen Ausgabegeräts (12) angezeigten virtuellen Elemente (32, 34) sich relativ zur virtuellen Beobachtungsposition entsprechend der Bewegung des Kraftfahrzeugs (30) bewegen und/oder zumindest ein Teil der mittels des visuellen Ausgabegeräts (12) angezeigten virtuellen Elemente (32, 34) entsprechend der räumlichen Lage des Kraftfahrzeugs (30) relativ zur virtuellen Beobachtungsposition angeordnet werden, wobei die Steuereinrichtung (16) einen Zustand eines Trägers (28) des am Kopf tragbaren visuellen Ausgabegeräts (12) charakterisierende Sensordaten auswertet und das visuelle Ausgabegerät (12) in Abhängigkeit von diesen Sensordaten ansteuert, wobei ein Kommunikationsmodul (24) des Unterhaltungssystems (10) Daten von einem Server (26) empfängt, welche die persönlichen Vorlieben des Trägers (28) charakterisieren;
**dadurch gekennzeichnet, dass**
- die Steuereinrichtung (16) in Abhängigkeit von der Bewegung des Kraftfahrzeugs (30), dem Zustand und den persönlichen Vorlieben eines Trägers (28) des am Kopf tragbaren visuellen Ausgabegeräts (12) Musikdateien auswählt und einen Lautsprecher (14) zum Ausgeben der ausgewählten Musikdateien ansteuert;
- wobei die Steuereinrichtung (16) bei der Auswahl der Musikdateien eine Musikrichtung im Hinblick auf die Beats per Minute an die Bewegung des Kraftfahrzeugs (30), den Zustand und die persönlichen Vorlieben des Trägers (28) anpasst.

## Claims

1. Entertainment system (10) for a motor vehicle (30), comprising:
- at least one visual output device (12) worn on the head, which is designed to display virtual elements (32, 34) from a specified virtual observation position;
- a means of control, (16) which is designed to evaluate sensor data that characterise a movement and/or a spatial location of the motor vehicle (30) and to control the visual output device (12) in such a way that at least a part of the virtual elements (32, 34) displayed by means of the visual output device (12) moves relative to the virtual observation position corresponding to the movement of the motor vehicle (30) and/or at least a part of the virtual elements (32, 34) displayed by means of the visual output device (12) is arranged corresponding to the spatial location of the motor vehicle (30) relative to the virtual observation position;
- wherein the means of control (16) is designed to evaluate sensor data characterising a condition of a wearer (28) of the visual output device (12) worn on the head and to control the visual output device (12) as a function of these sensor data; wherein a communication module (24) of the entertainment system (10) is designed to receive data, which characterise the personal preferences of the wearer (28), from a sensor (26);
**characterised in that**
- the means of control (16) is designed to choose music files as a function of the movement of the motor vehicle (30), the condition and the personal preferences of a wearer (28) of the visual output device (12) worn on the head and to control a loudspeaker (14) for outputting the chosen music data;
- wherein the means of control (16) is designed to, when choosing the music files, adapt a musical genre with regard to the beats per minute to the movement of the motor vehicle (30), the condition and the personal preferences of the wearer (28).

2. Entertainment system (10) according to claim 1,
**characterised in that**
the means of control (16) is designed to evaluate data characterising personal preferences of a wearer (28) of the visual output device (12) worn on the head and to control the visual output device (12) as a function of these data.

3. Entertainment system (10) according to any of the preceding claims, **characterised in that**
the entertainment system (10) exclusively has extra-vehicular sensors (18, 20, 22) for registering the movement of the motor vehicle (30) and/or for registering the spatial location of the motor vehicle (30) and/or for registering the condition of a wearer (28) of the visual output device (12) worn on the head.

4. Entertainment system (10) according to any of claims 1 to 2,
**characterised in that**
the entertainment system (10) exclusively has sensors (18, 20, 22) integrated in the vehicle for registering the movement of the motor vehicle (30) and/or for registering the spatial location of the motor vehicle (30) and/or for registering the condition of a wearer (28) of the visual output device (12) worn on the head.

5. Entertainment system (10) according to claim 4,
**characterised in that**
the means of control (16) is a non-vehicular control device, in particular is integrated into the visual output device (12) worn on the head, and the entertainment system (10) has an interface, which is compatible with a diagnostic socket in the vehicle, for transferring the sensor data to the means of control (16).

6. Entertainment system (10) according to any of the preceding claims, **characterised in that**
the visual output device (12), worn on the head, is a pair of Virtual Reality goggles or Augmented Reality goggles.

7. Method for operating an entertainment system (10), wherein virtual elements (32, 34) are displayed from a specified observation position by means of at least one visual output device (12) worn on the head, wherein sensor data characterising a movement and/or a spatial location of a motor vehicle (30) are evaluated by means of a means of control (16) and the visual output device (12) is controlled in such a way that at least a part of the virtual elements (32, 34) displayed by means of the visual output device (12) moves relative to the virtual observation position corresponding to the movement of the motor vehicle (30) and/or at least a part of the virtual elements (32, 34) displayed by means of the visual output device (12) is arranged corresponding to the spatial location of the motor vehicle (30) relative to the virtual observation position, wherein the control means (16) evaluates sensor data characterising a condition of a wearer (28) of the visual output device (12) worn on the head and controls the visual output device (12) as a function of these sensor data, wherein a communication module (24) of the entertainment system (10) receives data which characterise the personal preferences of the wearer (28) from a server (26);
**characterised in that**
- the means of control (16) chooses music files as a function of the movement of the motor vehicle (30), the condition and the personal preferences of a wearer (28) of the visual output device (12) worn on the head and to control a loudspeaker (14) for outputting the chosen music data;
- wherein the means of control (16), when choosing the music files, adapts a musical genre with regard to the beats per minute to the movement of the motor vehicle (30), the condition and the personal preferences of the wearer (28).

## Revendications

1. Système de divertissement (10) pour un véhicule automobile (30), comprenant
- au moins un appareil de sortie (12) visuel portable au niveau de la tête qui est conçu afin d'afficher des éléments (32, 34) virtuels depuis une position d'observation virtuelle prédéfinie ;
- un dispositif de commande (16) qui est conçu afin d'évaluer des données de capteur caractérisant un mouvement et/ou une position spatiale du véhicule automobile (30) et de commander l'appareil de sortie (12) visuel de telle manière qu'au moins une partie des éléments (32, 34) virtuels affichés au moyen de l'appareil de sortie (12) visuel se déplace par rapport à la position d'observation virtuelle selon le mouvement du véhicule automobile (30) et/ou au moins une partie des éléments (32, 34) virtuels affichés au moyen de l'appareil de sortie (12) visuel soit agencée selon la position spatiale du véhicule automobile (30) par rapport à la position d'observation virtuelle ;
- dans lequel le dispositif de commande (16) est conçu afin d'évaluer des données de capteur caractérisant un état d'un porteur (28) de l'appareil de sortie (12) visuel portable au niveau de la tête et de commander l'appareil de sortie (12) visuel en fonction de ces données de capteur ;
dans lequel un module de communication (24) du système de divertissement (10) est conçu afin de recevoir des données d'un serveur (26) qui caractérisent les préférences personnelles du porteur (28) ;
**caractérisé en ce que**
- le dispositif de commande (16) est conçu afin de sélectionner, en fonction du mouvement du véhicule automobile (30), de l'état et des préférences personnelles d'un porteur (28) de l'appareil de sortie (12) visuel portable au niveau de la tête, des fichiers de musique et de commander un haut-parleur (14) pour la sortie des fichiers de musique sélectionnés ;
- dans lequel le dispositif de commande (16) est conçu afin d'adapter lors de la sélection des fichiers de musique un genre de musique en ce qui concerne les battements par minute au mouvement du véhicule automobile (30), à l'état et aux préférences personnelles du porteur (28).

2. Système de divertissement (10) selon la revendication 1,
**caractérisé en ce que**
le dispositif de commande (16) est conçu afin d'évaluer des données caractérisant des préférences personnelles d'un porteur (28) de l'appareil de sortie (12) visuel portable au niveau de la tête et de commander l'appareil de sortie (12) visuel en fonction de ces données.

3. Système de divertissement (10) selon l'une des revendications précédentes, **caractérisé en ce que**
le système de divertissement (10) présente des capteurs (18, 20, 22) exclusivement externes au véhicule pour la détection du mouvement du véhicule automobile (30) et/ou pour la détection de la position spatiale du véhicule automobile (30) et/ou pour la détection de l'état d'un porteur (28) de l'appareil de sortie (12) visuel portable au niveau de la tête.

4. Système de divertissement (10) selon l'une des revendications 1 à 2,
**caractérisé en ce que**
le système de divertissement (10) présente des capteurs (18, 20, 22) intégrés côté véhicule exclusivement pour la détection du mouvement du véhicule automobile (30) et/ou pour la détection de la position spatiale du véhicule automobile (30) et/ou pour la détection de l'état d'un porteur (28) de l'appareil de sortie (12) visuel portable au niveau de la tête.

5. Système de divertissement (10) selon la revendication 4,
**caractérisé en ce que**
le dispositif de commande (16) est un dispositif de commande externe au véhicule, en particulier est intégré dans l'appareil de sortie (12) visuel portable au niveau de la tête, et le système de divertissement (10) présente une interface compatible avec une douille de diagnostic côté véhicule pour la transmission des données de capteur au dispositif de commande (16).

6. Système de divertissement (10) selon l'une des revendications précédentes, **caractérisé en ce que**
l'appareil de sortie (12) visuel portable au niveau de la tête est un casque de réalité virtuelle ou un casque de réalité augmentée.

7. Procédé de fonctionnement d'un système de divertissement (10), pour lequel, au moyen d'au moins un appareil de sortie (12) visuel portable au niveau de la tête, des éléments (32, 34) virtuels sont affichés depuis une position d'observation virtuelle prédéfinie, dans lequel, au moyen d'un dispositif de commande (16), des données de capteur caractérisant un mouvement et/ou une position spatiale d'un véhicule automobile (30) sont évaluées et l'appareil de sortie (12) visuel est commandé de telle manière qu'au moins une partie des éléments (32, 34) virtuels affichés au moyen de l'appareil de sortie (12) visuel se déplace par rapport à la position d'observation virtuelle selon le mouvement du véhicule automobile (30) et/ou au moins une partie des éléments (32, 34) virtuels affichés au moyen de l'appareil de sortie (12) visuel selon la position spatiale du véhicule automobile (30) soit agencée par rapport à la position d'observation virtuelle, dans lequel le dispositif de commande (16) évalue des données de capteur caractérisant un état d'un porteur (28) de l'appareil de sortie (12) visuel portable au niveau de la tête et commande l'appareil de sortie (12) visuel en fonction de ces données de capteur, dans lequel un module de communication (24) du système de divertissement (10) reçoit des données d'un serveur (26) qui caractérisent les préférences personnelles du porteur (28) ;
**caractérisé en ce que**
- le dispositif de commande (16) sélectionne des fichiers de musique en fonction du mouvement du véhicule automobile (30), de l'état et des préférences personnelles d'un porteur (28) de l'appareil de sortie (12) visuel portable au niveau de la tête et commande un haut-parleur (14) pour la sortie des fichiers de musique sélectionnés ;
- dans lequel le dispositif de commande (16) adapte, lors de la sélection des fichiers de musique, un genre de musique concernant les battements par minute au mouvement du véhicule automobile (30), à l'état et aux préférences personnelles du porteur (28).
